# EUROPEAN PATENT APPLICATION

(11) **EP 0 856 694 A1**
(43) Date of publication of application: **05.08.1998**
(21) Application number: 97122972.9
(22) Date of filing: 30.12.1997
(51) Int. Cl.: F16L 1/032, F16L 55/165

(54) **Pipe-laying method whereby a flattened tube is inflated with a liquid, preferably water**

(30) Priority: 30.01.1997 GB 9701878
(71) Applicant: SOUND PIPE LTD, Grand Turk, Turks and Caicos Islands (TC)
(72) Inventor: Chandler, Brian, Steinermark (AT)
(74) Representative: Denmark, James

(57) **Abstract**

This invention concerns the use of tubular flexible structures which comprise or include a curable synthetic resin which can be cured to a rigid state. The invention provides that the tubular structure forms a long section of a pipe which can be used for example to carry liquid such as water or gas over long distances. The tubular structure is initially in coiled form or folded concertina fashion, and is taken to the site by vehicle from which it is unrolled or unfolded as the vehicle is moved, so as to be laid out on the ground or in a trench in the ground, and then the structure is inflated to pipe form using water. Whilst the ends of the structure are held up to retain the water and to keep the structure inflated, the resin is cured so that a rigid pipe section is formed. The water is removed, and the ends of the pipe section are trimmed. The process is repeated with other similar tubular flexible structures, and the pipe sections are joined end to end, to form the pipeline. Each section may be of the order of 300 or more metres.

## Description

This invention relates to the provision of pipes and pipelines, especially those pipes and pipelines which have to extend over long distances. The pipes and pipelines may be provided in the ground, or on the ground, but in particular they are designed to enable the carrying of fluent materials over large distances.

Pipes and pipelines of the nature to which the present invention applies, are used in great quantities throughout the world. For example in the United States, water and gas pipelines represent a market of some $150,000,000 per annum in one particular form of pipe namely rigid glass reinforced plastic pipe. Such pipe comprises sections of relatively short length e.g. up to 3 or 4 metres which are transported by suitable transport vehicles to the site where the pipe sections are to be laid. Transportation represents an enormous cost and unnecessary expenditure insofar as the rigid pipe sections take up a large volume and in effect involve the transportation of air.

Because the pipe sections are of a relatively short length, it is necessary to form a large number of pipe joins in any particular pipeline extending over any substantial distance. The joins involve special fitting and sealing, and furthermore represent locations for potential leakage problems.

All in all, the present technology involving the laying of long pipelines made up of lengths of GRP plastic pipe, is uneconomic and time consuming.

The present invention seeks to provide a method for the laying of pipes and pipelines whereby some of the aforesaid disadvantages will be obviated or mitigated.

According to one aspect of the present invention there is provided a method of laying a pipe or pipeline in or on the ground by taking to the site a long, flattened flexible tubular structure which can be inflated to pipe configuration, and which comprises a curable synthetic resin system, and wherein the resin is cured when the structure is inflated and is in position in order to form the rigid pipe or pipeline, the method being characterised in that the tubular structure is laid out lengthwise in position on site and is inflated by filling same with liquid whilst at least one end of the tubular structure is held in upwardly extended position to retain the water, whilst the resin of the flexible tubular structure cures.

Preferably, both ends of the tubular structure arc held in extended upright position to retain the water, whilst the resin of the flexible tubular structure cures.

According to another aspect of the invention, the tubular structure is laid in position by a vehicle which carries the flattened tubular structure, and such structure is fed progressively from the vehicle as the vehicle moves in the direction in which the tubular structure is to be laid.

The two aspects preferably are used together.

In order to effect the cure of the resin system, the flexible tubular structure preferably has energy applied thereto, and in one arrangement, the resin system which is used is of a nature which requires the application of radiant energy to cause at least initiation of the cure of the resin system, and such energy is applied preferably as the tubular structure is being discharged from the vehicle, so that curing is initiated progressively along the length of the tubular structure as it is being fed from the vehicle, and as water is being charged into the inside of the tubular structure in order to inflate same, the arrangement being that a leading end of the tubular structure is fed from the vehicle through a cure initiation means, and feeding of the tube from the vehicle continues as curing is effected progressively along the length of the tube, and water is charged into the leading end of the tube in order progressively to fill same, and when the discharging of the tube from the vehicle has been completed, the leading end and trailing end of the tubular structure are held upright retaining the water therein which inflates the tubular structure to hold it in pipe shape whilst the resin finally cures to a rigid condition.

When the resin has cured, the resulting pipe or pipeline now in situ can be trimmed to length.

By this method, long lengths of pipe or pipeline without stress and without any joints can be laid in or on the ground. For example, pipe lengths of the order of 300 metres or more can be laid in this way. Where pipelines are to traverse large distances across ground, then pipe lengths so formed can be properly joined end to end by any suitable means.

Any suitable flexible tubular structure of known type may be utilised in connection with the present invention, and one suitable form of flexible tubular structure is set forth in International Patent Application No. PCT/GB93/00705, which is a tubular structure comprising inner and outer layers, the outer layer being of a material which is flexible, and the inner layer being of a material which is impregnated with the curable resin system. Suitably, an intermediate layer may be provided and the structure may furthermore include a leak detection system as set forth in said International Application. Alternatively, the tubular structure may be as set forth in International Patent Application No WO 96/36476, wherein the structure is composite of the resin system and fibres, which advantageously, but need not be extruded.

Any type of fibres may be used, including glass fibres, synthetic fibres such as those known as Kevlar fibres, or natural fibres, especially natural fibres which have been rendered hydrophobic by the process of acetylation, as disclosed in International Patent Application No. GB97/01858.

As to the resin system which is used, this may be of any suitable, nature, but is preferably of the "latent" type which requires the application of energy to initiate and/or effect the cure. For example, the resin may be of such nature that the cure can be initiated by the application of ultrasonic energy thereto, and the resin system may therefore include particles for example of clay in which is adsorbed a hardener and/or accelerator for initiating and effecting the cure of the resin which impregnates the tubular structure. The resin system and cure initiating means may be as International patent application No PCT/GB93/00107.

One particularly appropriate type of resin which can be used is a light cure resin which can be cured by the suns rays. The structure would then be held in an opaque envelope until ready for use, in which case no additional energy source for curing the resin on site would be required.

The tubular structure may be laid directly on the ground surface where the pipe is to be formed so as to extend over the ground surface, or it may be positioned in a pre-formed trench in the ground. It can also be fed into the ground behind a mole device where appropriate.

As to the preferred method of jointing lengths of finished pipe end to end, the jointing may be effected as described in said International Patent Application No. PCT/GB93/00705, where the flexible tubular structure is of the appropriate configuration.

An embodiment of the present invention will now be described, by way of example, with reference to the accompanying diagrammatic drawings, wherein:-
Figs. 1 to 5 show in respective stages how a length of pipe formed from a flexible tubular structure may be laid in a pre-prepared trench in the ground; and
Fig. 6 is a sectional view of one form of structure usable in the invention.

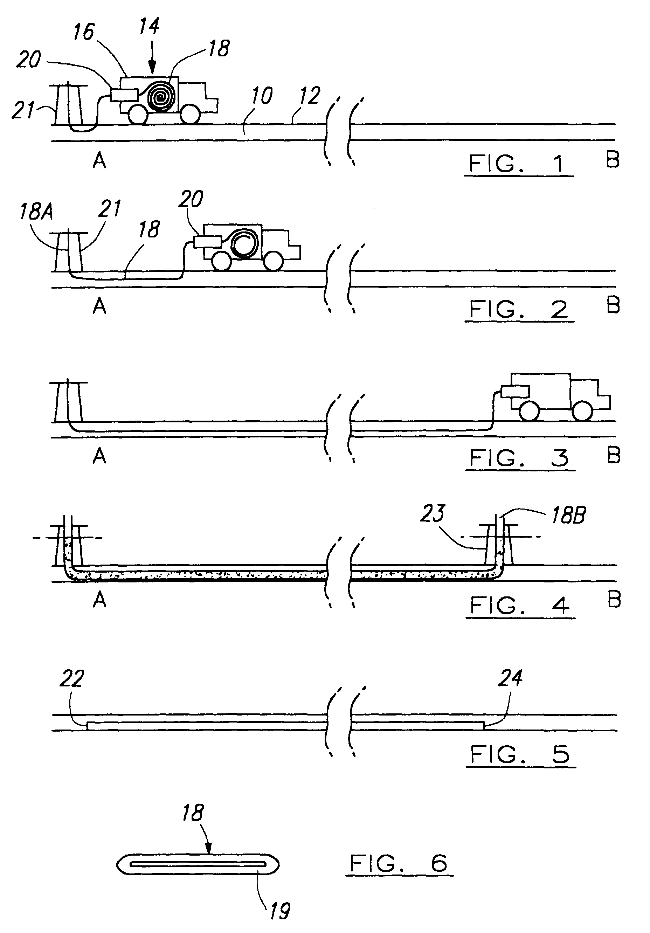

Referring to the drawings, a pre-prepared trench 10 in the ground 12 is to be provided with a length of rigid pipe. The length of the trench between locations A and B may be in the order of 300-400 metres, and in accordance with the method of the invention, a length of pipe without any joints therein is to extend between locations A and B. To achieve this, a vehicle 14 of suitable design carries in the trailer 16 thereof a roll 18 of a flexible tubular structure which is to form the pipe. The tubular structure 18 is of a nature as shown in Fig. 6 comprising at least one layer 19 which is impregnated with or contains a curable resin system. The resin system is still in fluent or flexible semi-solid state at this time, and therefore the structure is still flexible, but in the finished pipe the resin is cured providing the pipe with its rigid characteristic. The flexible tubular structure 18 is of a length capable of extending between locations A and B in the trench plus a few extra metres at each end for a purpose to be described. To lay the tubular structure in the trench it is simply a matter of locating the leading end 18A in a support tower 21 so that it extends upwards as shown followed by driving the vehicle between the locations A and B whilst the tubular structure is unrolled from the roll form. Fig. 2 shows the vehicle in an intermediate position between locations A and B, and in this figure it will be seen that the flexible tubular structure 18 has been partially unrolled and laid in the trench 10. Fig. 3 shows the vehicle in the end position at location B, and the flexible tubular structure has been fully unrolled. The trailing end 18B is supported upright by tower 23.

The vehicle in this example is also provided with a cure initiating apparatus 20 which is in this example an ultrasonic energy generator through which the tubular structure passes. The energy generator may be as described in U.S. Patent No. 4,788,992, and the purpose of applying ultrasonic energy to the tubular lining structure as it is fed from the vehicle is to initiate the cure of the resin system. This may be effected as described hereinbefore and in particular as in any of the said co-pending applications. Initiation of the cure means that the resin system will start to gel, but the resin system does not pass to the rigid condition until some time later and certainly not before the tubular structure is filled with water as shown in Fig. 4 in order to inflate the tubular structure to pipe shape.

The held ends 18A and 18B form a simple and effective means of maintaining the head of water needed to keep the structure inflated whilst complete curing takes place.

The tubular structure is held in the inflated condition until the resin does cure to the rigid form following which the inflating water can be removed and the ends can be trimmed in order to leave a length of pipe of rigid construction in the trench as shown in Fig. 5, the trimmed ends being indicated by reference numerals 22 and 24.

As noted in Fig. 4, the end portions 18A, 18B of the flexible tubular liner are held upright in order to trap the water therein thereby keeping the tubular structure which is in the trench inflated whilst the resin cures. As initiation of the cure has been effected prior to placement of the tubular structure in the trench, the water which is used for inflating the tubular structure can be water which is at ambient temperature, which represents a considerable advantage as for example heating of the water in order to effect or enhance the cure, a method practised in known pipe lining applications, represents considerable extra expenditure and inconvenience. Heating of water costs money, and providing hot water at remote locations is not easy. If the water can be an ambient temperature, it can be drawn from local sources such as ponds or rivers.

A simple and effective means is provided according to the invention whereby long lengths of pipe can be formed in or on the ground on site, and transportation is particularly efficient, because during transportation the said pipes are in a different condition namely they are in the form of flat flexible tubular structures which can be rolled up so as to take up minimum space on the transporting vehicle. Because there are only minimum joints, the number of leakage points in a given pipeline will be much reduced compared to the conventional GRP pipelines which are used at present. The placement of the pipe is much quicker than jointing a number of short lengths of GRP pipe, and long lengths of pipeline can be laid in days rather than weeks as compared to the conventional arrangement. The structures can adapt to the shape of the ground whilst curing.

The flexible tubular structure will be designed depending upon the job which the resulting pipe has to perform. For example, if the resulting pipe is to be capable of withholding high pressures, then the flexible tubular structure will be designed accordingly. For example, the tube may be constructed as set forth in our copending GB patent application No. 9718460.0, which involves wrapping the fibre of the tube on a mandrel in helical and axial fashion. If it is on the other hand simply for providing a relatively temporary pipe for transporting water, then it need not have the same strength characteristics.

If each length of pipe is provided with its own unique section of leak detection system the location of leaks is simplified.

Although it has been indicated that the resin of the structure is cured in the embodiment by ultra-sonic energy, other forms can be used namely light or heat energy, or indeed the resin may be allowed to cure naturally without the application of any energy. Again, the tube can be cured using laser after it has been placed in position, and in such circumstances, the resin system may be one such as a phenolic resin without a catalyst, in that the laser light can heat the tube up to 120°C. This is a relatively inexpensive method of curing. It is preferred that the head of water to inflate the tube be sufficiently high to keep the tube round during curing, and to compress the fibres where the fibres are used in layers. Such a head preferably gives rise to a pressure of 10 p.s.i., in the tube.

## Claims

1. A method of laying a pipe or pipeline in or on the ground by taking to the site a long, flattened flexible tubular structure which can be inflated to pipe configuration, and which comprises a curable synthetic resin system, and wherein the resin is cured when the structure is inflated and is in position in order to form the rigid pipe or pipeline, the method being characterised in that the tubular structure is laid out lengthwise in position on site and is inflated by filling same with liquid whilst at least one end of the tubular structure is held in upwardly extended position to retain the water, whilst the resin of the flexible tubular structure cures.

2. A method according to claim 1, wherein both ends of the tubular structure are held in upwardly extending position.

3. A method according to claim 1, wherein the resin is allowed to cure naturally with the passage of time.

4. A method according to claim 1 or 2, wherein the resin is a latent resin and is cured by the application of energy thereto.

5. A method according to claim 4, wherein the curing energy is heat energy.

6. A method according to claim 4, wherein the curing energy is light energy.

7. A method according to claim 4, wherein the curing energy is ultra-sonic energy.

8. A method according to any preceding claim, wherein the tubular structure is laid in position by a vehicle which carries the flattened tubular structure, and such structure is fed progressively from the vehicle as the vehicle moves in the direction in which the tubular structure is to be laid.

9. A method of laying a pipe or pipeline in or on the ground by taking to the site a long, flattened flexible tubular structure which can be inflated to pipe configuration, characterised in that the tubular structure is laid in position by a vehicle which carries the flattened tubular structure, and such structure is fed progressively from the vehicle as the vehicle moves in the direction in which the tubular structure is to be laid.

10. A method according to claim 9 or 10, wherein, when energy is applied to the tubular structure to cure the resin therein, the energy is applied as the tubular structure is being discharged from the vehicle, so that curing is initiated progressively along the length of the tubular structure as it is being fed from the vehicle, and as water is being charged into the inside of the tubular structure in order to inflate same, the arrangement being that a leading end of the tubular structure is fed from the vehicle through a cure initiation means, and feeding of the tube from the vehicle continues as curing is effected progressively along the length of the tube, and water is charged into the leading end of the tube in order progressively to fill same, and when the discharging of the tube from the vehicle has been completed, at least the trailing end of the tubular structure is held upright retaining the water therein which inflates the tubular structure to hold it in pipe shape whilst the resin finally cures to a rigid condition.

11. A method according to any preceding claim, wherein the tubular structure is either laid directly on the ground surface where the pipe is to be formed so as to extend over the ground surface, or it is laid in a pre-formed trench in the ground.

12. A method according to any of claims 1 to 10, wherein the tubular structure is fed into the ground behind a mole device where appropriate.
